# EUROPÄISCHE PATENTSCHRIFT

(11) **EP 1 252 078 B1**
(45) Veröffentlichungstag und Bekanntmachung des Hinweises auf die Patenterteilung: **06.10.2004**
(21) Anmeldenummer: 01907333.7
(22) Anmeldetag: 05.01.2001
(51) Int. Cl.: B65G 23/00, B65G 43/00, H02P 5/00, G05D 13/00

(54) **VERFAHREN ZUM STEUERN DES HOCHLAUFS EINES FÖRDERBANDES UND ANTRIEBSEINRICHTUNG FÜR EIN FÖRDERBAND**
METHOD FOR CONTROLLING THE RUN-UP OF A CONVEYOR BELT AND DRIVE DEVICE FOR A CONVEYOR BELT
PROCEDE DE COMMANDE DE LA MONTEE EN REGIME D'UNE BANDE TRANSPORTEUSE ET DISPOSITIF D'ENTRAINEMENT D'UNE BANDE TRANSPORTEUSE

(30) Priorität: 21.01.2000 DE 10002563
(43) Veröffentlichungstag der Anmeldung: 30.10.2002
(73) Patentinhaber: SIEMENS AKTIENGESELLSCHAFT, 80333 München (DE)
(72) Erfinder: BECKER, Norbert, 91341 Röttenbach (DE); NEUFFER, Ingemar, 91054 Erlangen (DE)
(86) Internationale Anmeldenummer: PCT/DE2001/000026
(87) Internationale Veröffentlichungsnummer: WO 2001/053174

(56) Entgegenhaltungen:
- EP-A- 0 433 627
- US-A- 4 706 003

## Beschreibung

Die Erfindung bezieht sich auf ein Verfahren zum Steuern des Hochlaufs eines Förderbandes und auf eine Antriebseinrichtung für ein Förderband.

Förderbandanlagen mit großer Länge, beispielsweise im Bereich von einigen Kilometern, müssen besonders sanft angefahren und gebremst werden, damit Gurtschwingungen und zu große Gurtzüge vermieden sind. Die Drehzahl der Antriebsmotoren wird deshalb von einer Steuereinrichtung, einem sogenannten Sanft-Hochlaufgeber, gesteuert, um einen weichen Hochlauf der Drehzahl zu ermöglichen.

Aus "M.B.Singh, The Role of Drive System Technology in Maximizing the Performance and Economics of Long Belt Conveyors", bulk solids handling, Vol. 14, 1994, S. 695-702 ist es beispielsweise bekannt, die Drehzahl der Antriebstrommel und damit die Bandgeschwindigkeit u* in einem ersten Zeitabschnitt t1 mit linear ansteigender Beschleunigung a* hochzufahren. Um die Beschleunigungsphase zu beenden, wird in einem zweiten Zeitabschnitt t2 die Beschleunigung a* wieder auf Null abgebaut. Dieser Abbau erfolgt ebenfalls linear. Mit anderen Worten: Die erste Zeitableitung r der Beschleunigung a*, in der Fachsprache auch als Ruck (engl. jerk) bezeichnet, ist in einem ersten Zeitabschnitt t1 konstant und positiv und in einem zweiten Zeitabschnitt t2 ebenfalls konstant und negativ. Der Kurvenverlauf der Drehzahl bzw. Geschwindigkeit v* gegen die Zeit wird somit durch quadratische Funktionen mit umgekehrter Krümmung gebildet, die unmittelbar aneinander anschließen, d.h. bei dem der erste Zeitabschnitt t1 mit ansteigender Beschleunigung a* und der zweite Zeitabschnitt t2 mit abfallender Beschleunigung a* unmittelbar aufeinander folgen.

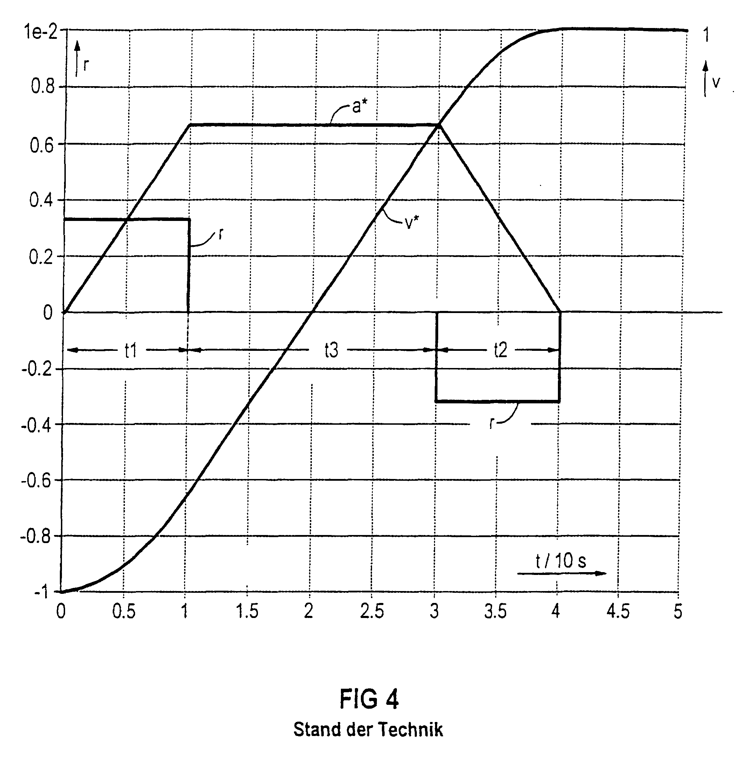

Der beim bekannten Verfahren verwendete Zeitverlauf des Sollwertes der Beschleunigung a*, des Sollwertes der Geschwindigkeit v* und der ersten Zeitableitung r des Sollwertes der Beschleunigung a* (Ruck) ist in FIG 4 in einem Diagramm aufgetragen.

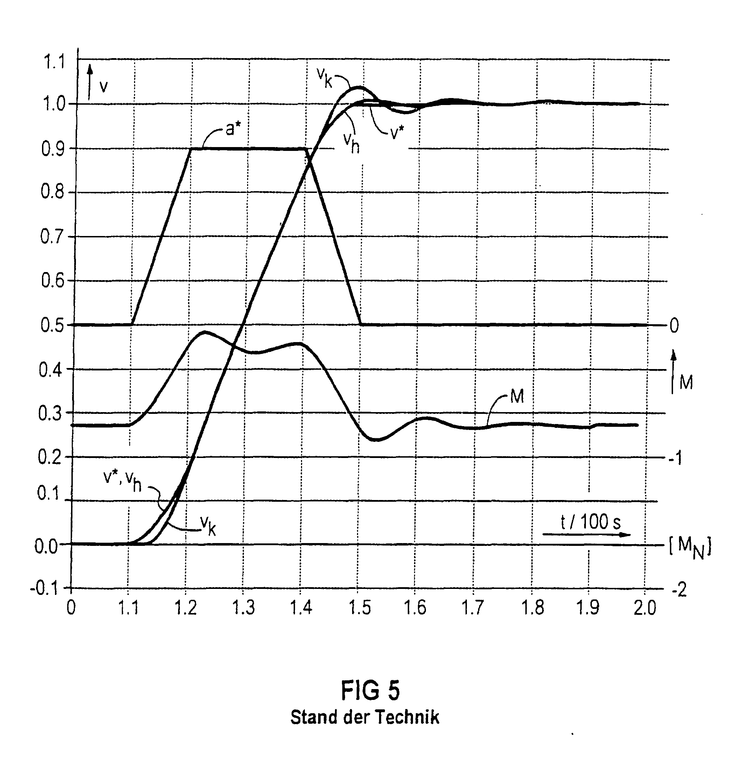

FIG 5 zeigt in einem Diagramm das sich beim bekannten Verfahren ergebende Motormoment M sowie die reale Kopf- und die Heckgeschwindigkeit vₖ und vₕ eines Förderbandes mit einer Länge 5000 m bei einer Zeitdauer des ersten Zeitabschnittes und des zweiten Zeitabschnittes von 20s und einer maximalen normierten Beschleunigung von 0,05s⁻¹, wie sie sich bei einem solchen Anfahrvorgang ergeben. Dabei ist unter normierter Beschleunigung der Quotient aus tatsächlicher Beschleunigung und Endgeschwindigkeit des Bandes zu verstehen. In der FIG ist deutlich zu erkennen, dass sowohl im Motormoment M als auch im Förderband selbst signifikante Schwingungen auftreten, die bei großen Förderanlagen zu störenden Betriebszuständen führen können.

Alternativ hierzu ist es auch bekannt, den Bandantrieb mit einer Beschleunigungs-Zeit-Kurve anzusteuern, die nach einer Sinuskurve verläuft. Bei dieser Methode wird die Beschleunigung ebenfalls bis zu einem Maximalwert stetig erhöht und von dort aus stetig abgebaut, wobei die erste Zeitableitung der Beschleunigung im Maximum, d.h. der Ruck Null ist. Auch bei dieser Methode treten insbesondere am Ende des Hochlaufs Band- und Drehmomentschwingungen auf.

Bei beiden Verfahren ergibt sich somit das Problem, dass insbesondere am Ende des Hochfahrvorgangs Über- bzw. Unterschwinger im Motormoment auftreten, die auch einen größeren Gurtzug zur Folge haben. Darüber hinaus ist es insbesondere beim zweitgenannten Verfahren nicht möglich, während des Hochlaufs bei gleicher Kurvencharakteristik eine andere Drehzahl anzufahren, da die Kurvencharakteristik durch die Anfahrzeit, die bei diesem bekannten Verfahren gleich der Summe der Zeitdauer des ersten Zeitabschnitts und der Zeitdauer des zweiten Zeitabschnitts ist, und der vorgegebenen Endgeschwindigkeit eindeutig festgelegt ist. Ergänzend wird noch auf die Patentschrift US4706003A verwiesen. Dont wird eine steuervorrichtung für Electro antriebe beichreiben, bei der die Ecken des geschwindigkeitsprofils exponentiell verschliffen werden, so daß keine Stöße auftreten

Der Erfindung liegt nun die Aufgabe zugrunde, ein Verfahren zum Steuern des Hochlaufs eines Förderbandes anzugeben, bei dem die vorstehend genannten Probleme weitgehend vermieden sind. Der Erfindung liegt außerdem die Aufgabe zugrunde, eine Antriebseinrichtung zur Durchführung des Verfahrens anzugeben.

Die erstgenannte Aufgabe wird gemäß der Erfindung gelöst mit einem Verfahren mit den Merkmalen des Patentanspruches 1. Beim erfindungsgemäßen Verfahren zum Steuern des Hochlaufs eines Förderbandes wird in einem ersten Zeitabschnitt der Sollwert der Bandgeschwindigkeit mit stetig zunehmender Beschleunigung und in einem zweiten Zeitabschnitt mit stetig abnehmender Beschleunigung erhöht, wobei der Kurvenverlauf der gegen die Zeit aufgetragenen Beschleunigung im zweiten Zeitabschnitt eine positive Krümmung aufweist. Da durch die positive, d.h. nach oben konkave Krümmung der Beschleunigung der Ruck im zweiten Zeitabschnitt stetig abnimmt, können durch ein in dieser Weise gestaltetes Anfahrprogramm Bandschwingungen am Ende der Beschleunigungsphase weitgehend eliminiert werden. Zusätzlich ist die zweite Zeitableitung der Beschleunigung im ersten und im zweiten Zeitabschnitt jeweils konstant und entgegengesetzt gleich groß. Durch diese Maßnahme ist es möglich, das Anfahrprogramm jederzeit zu unterbrechen und es ist möglich, während des Hochfahrens die vorgegebene Enddrehzahl oder Endgeschwindigkeit zu ändern, ohne dass sich hierdurch eine andere Charakteristik des Beschleunigungs-Zeitverlaufes ergibt.

In einer besonders bevorzugten Ausgestaltung des erfindungsgemäßen Verfahrens ist die erste Zeitableitung der Beschleunigung am Ende des zweiten Zeitabschnittes gleich Null. Dadurch ist ein besonders weiches und sanftes Einfahren des Förderbandes in seine Endgeschwindigkeit sichergestellt.

Die zweitgenannte Aufgabe wird gelöst mit einer Antriebseinrichtung mit den Merkmalen des Patentanspruches 7. Eine solche Antriebseinrichtung enthält einen Motor zum Antreiben einer Antriebstrommel, dem eine Steuereinrichtung zugeordnet ist, die ein Steuern des Sollwertes der Bandgeschwindigkeit beim Hochlauf des Förderbandes derart ermöglicht, dass diese in einem ersten Zeitabschnitt mit stetig zunehmender Beschleunigung stetig zunimmt und in einem zweiten Zeitabschnitt mit stetig abnehmender Beschleunigung derart abnimmt, dass der Kurvenverlauf der gegen die Zeit aufgetragenen Beschleunigung eine positive Krümmung aufweist. Zusätzlich ist die zweite Zeitableitung der Beschleunigung im ersten und im zweiten Zeitabschnitt jeweils konstant und entgegengesetzt gleich groß. Durch diese Maßnahme ist es möglich, das Anfahrprogramm jederzeit zu unterbrechen und es ist möglich, während des Hochfahrens die vorgegebene Enddrehzahl oder Endgeschwindigkeit zu ändern, ohne dass sich hierdurch eine andere Charakteristik des Beschleunigungs-Zeitverlaufes ergibt.

Weitere vorteilhafte Gestaltungen der Antriebseinrichtung ergeben sich gemäß der weiteren Unteransprüche.

Zur weiteren Erläuterung der Erfindung wird auf das Ausführungsbeispiel der Zeichnung verwiesen. Es zeigen:
- FIG 1: eine Antriebseinrichtung gemäß der Erfindung in einer schematischen Prinzipdarstellung,
- FIG 2: ein Diagramm, in dem der Sollwert der Geschwindigkeit, die Beschleunigung und die erste Zeitableitung der Beschleunigung des Förderbandes jeweils gegen die Zeit aufgetragen sind, und
- FIG 3: ein Diagramm, in dem die wahre Bandgeschwindigkeit am Heck und am Kopf, der Sollwert der Bandgeschwindigkeit, die Beschleunigung und das Motormoment ebenfalls gegen die Zeit aufgetragen sind.
- FIG 4 und 5: jeweils den FIG 2 bzw. 3 analoge Diagramme mit einem im Stand der Technik bekannten Verfahren zum Steuern des Hochlaufs eines Förderbandes.

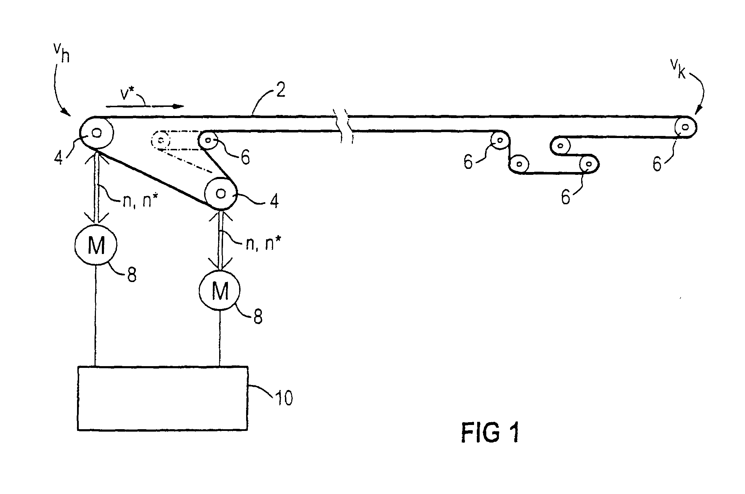

Gemäß FIG 1 ist ein Förderband 2 von zwei Antriebstrommeln 4 angetrieben. Umlenktrommeln 6 dienen zum Spannen oder Umlenken des Förderbandes 2. Den Antriebstrommeln 4 ist ein Motor 8, in der Regel ein Elektromotor, zugeordnet, wobei abweichend zum dargestellten Ausführungsbeispiel nicht jede Antriebstrommel 4 mit einem separaten Motor 8 angetrieben werden muss.

Die Motoren 8 sind an eine Steuereinrichtung 10 angeschlossen, die die Motordrehzahl n nach einem vorgegebenen Anfahrprogramm auf den Sollwert n* steuert. Der Sollwert der Motordrehzahl n* ist in nach Übersetzungsverhältnis des Getriebes proportional zum Sollwert der Drehzahl der Antriebsrollen 4, die wiederum proportional zum Sollwert der Bandgeschwindigkeit v* des Förderbandes 2 ist. In der Praxis stimmt dabei während des Anfahrens oder Abbremsens der durch den Sollwert der Motordrehzahl n* vorgegebene Sollwert der Bandgeschwindigkeit v* nicht mit der realen Bandgeschwindigkeit vₕ und vₖ am Heck (Antriebsseite) bzw. Kopf (Umlenktrommel am Bandende) überein, da es sich bei dem Förderband 2 nicht um einen idealen starren, sondern um einen realen, elastisch verformbaren Körper handelt.

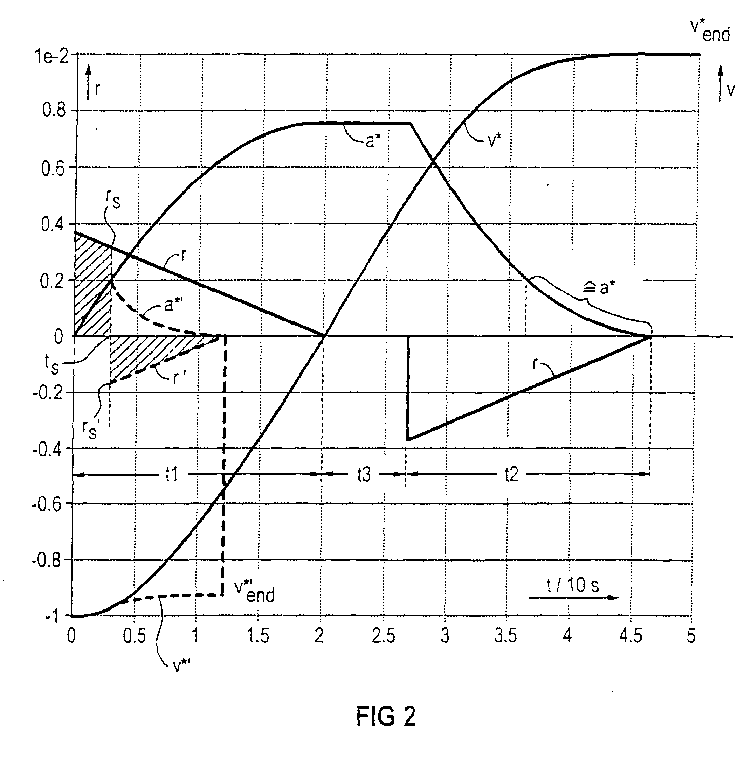

Gemäß FIG 2 nimmt die Beschleunigung a*, d. h. die erste Zeitableitung des Sollwertes der Geschwindigkeit v* beim Anfahren stetig mit konstanter konvexer Krümmung zu und erreicht am Ende eines ersten Zeitabschnittes t1 (erste Ruckzeit) seinen maximalen Wert. Die in der Figur aufgetragene Beschleunigung a* entspricht dabei nicht der realen Beschleunigung des Förderbandes 2, sondern ist lediglich das Differential des vorgegebenen Zeitverlaufes des Sollwertes der Bandgeschwindigkeit v*.

Die erste Zeitableitung der Beschleunigung a*, der Ruck r, ist positiv und wird durch eine Gerade mit negativer Steigung wiedergegeben, die am Ende des ersten Zeitabschnittes t1 die Abszisse schneidet. Die zweite Zeitableitung der Beschleunigung a* ist somit konstant und negativ und der Ruck r ist am Ende des ersten Zeitabschnittes t1 gleich Null.

In einem zweiten Zeitabschnitt t2 wird der Beschleunigungsvorgang beendet, wobei der Kurvenverlauf des Sollwertes der Beschleunigung a* eine positive, d.h. eine nach oben konkave Krümmung aufweist. Die Beschleunigung a* nimmt stetig ab und mündet am Ende des zweiten Zeitabschnittes t2 (zweite Ruckzeit) tangential in die Abszisse, d.h. die erste Zeitableitung der Beschleunigung a* ist am Ende des zweiten Zeitabschnittes t1 gleich Null.

Ebenso mündet die Sollgeschwindigkeit v* sanft in den Sollendwert v*_{end} ein, wobei der Sollendwert v*_{end} durch den stetig bis auf Null abnehmenden Ruck r besonders sanft angesteuert wird. Die zweite Zeitableitung der Beschleunigung a* ist im zweiten Zeitabschnitt konstant und positiv. Im Ausführungsbeispiel werden der Ruck r im ersten Zeitabschnitt t1 und der Ruck r im zweiten Zeitabschnitt t2 jeweils durch Geraden vorgegeben, deren Steigungen entgegengesetzt gleich groß sind.

Zwischen dem ersten Zeitabschnitt t1 und dem zweiten Zeitabschnitt t2 ist ein dritter Zeitabschnitt t3 vorgesehen, in dem der Sollwert der Bandgeschwindigkeit v* mit konstanter Beschleunigung, d.h. linear, zunimmt. Je nach Dauer der ersten Ruckzeit t1 oder des dritten Zeitabschnittes t3 können dann ohne Änderung der Charakteristik des Kurvenverlaufes beliebige Endgeschwindigkeiten angefahren werden. Dies ist in der Figur durch die gestrichelt eingezeichneten Kurven für eine Situation veranschaulicht, bei der die erste Ruckzeit im Zeitpunkt tₛ beendet wird. Der Ruck r springt dann (im Idealfall) von einem Wert rₛ auf einen Wert rₛ'. Die zweite Zeitableitung des Ruckes r für t > tₛ ist konstant und ist betragsmäßig gleich der zweiten Zeitableitung des Ruckes r für t < tₛ. Der Wert rₛ' ist dann so zu bestimmen, dass das Zeitintegral (schraffierte Flächen) über den Ruck r verschwindet. Der Abbau der Beschleunigung a*' auf Null erfolgt dann genau mit demselben Kurvenverlauf wie er auch in der Endphase (geschweifte Klammer) der Kurve a* vorliegt. Mit dem erfindungsgemäßen Verlauf der Endphase des Hochlaufs können somit bei gleichbleibender Kurvenform beliebige Endgeschwindigkeiten v_{end}*' angesteuert werden und der Hochlauf kann jederzeit ohne Änderung der Kurvencharakteristik beim Anfahren der Endgeschwindigkeit abgebrochen werden.

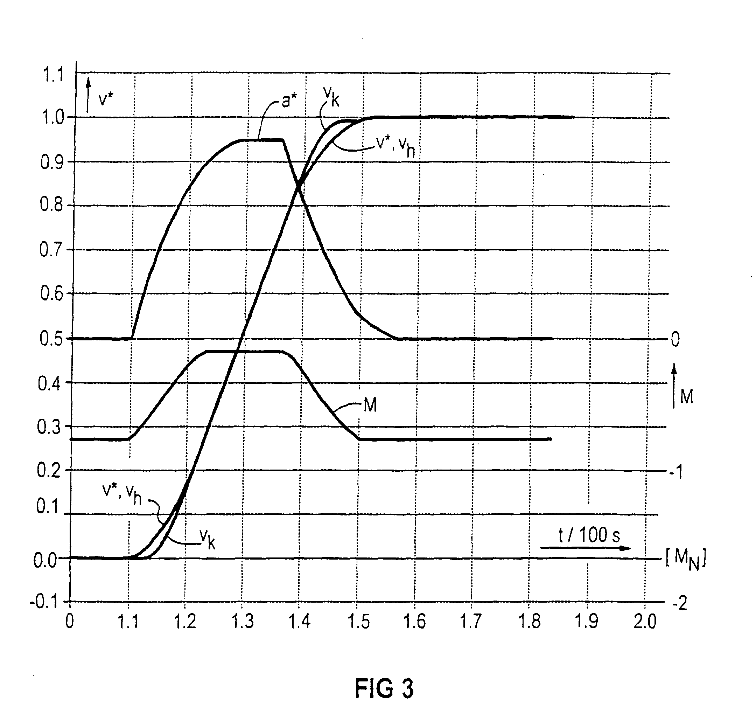

In FIG 3 ist anhand der aufgetragenen Kurven für das Motormoment M sowie der Istgeschwindigkeit eines Förderbandes am Kopf bzw. am Heck vₖ,vₕ zu erkennen, dass Band- und Drehmomentschwingungen praktisch vollständig unterdrückt sind. Die in der FIG dargestellten Verhältnisse geben den Hochlaufvorgang für ein Förderband an einer typischen Bandanlage bei einer Gesamtruckzeit von 20 Sekunden und einer maximalen normierten Beschleunigung von 0,05s⁻¹ wieder.

## Patentansprüche

1. Verfahren zum Steuern des Hochlaufs eines Förderbandes (2), bei dem in einem ersten Zeitabschnitt (t1) der Sollwert der Bandgeschwindigkeit (v*) mit zunehmender Beschleunigung (a*) und in einem zweiten Zeitabschnitt (t2) mit abnehmender Beschleunigung (a*) erhöht wird, wobei der Kurvenverlauf der gegen die Zeit (t) aufgetragenen Beschleunigung (a*) im zweiten Abschnitt (t2) eine positive Krümmung aufweist, wobei die zweite Zeitableitung der Beschleunigung (a*) im ersten und im zweiten Zeitabschnitt (t1, t2) jeweils konstant und entgegengesetzt gleich groß ist.

2. Verfahren nach Anspruch 1, bei dem die erste Zeitableitung der Beschleunigung (a*) am ende des zweiten Zeitabschnittes (t2) gleich Null ist.

3. Verfahren nach Anspruch 1 oder 2, bei dem die zweite Zeitableitung der Beschleunigung (a*) im zweiten Zeitabschnitt (t2) positiv ist.

4. Verfahren nach Anspruch 1, 2 oder 3, bei dem die zweite Zeitableitung der Beschleunigung (a*) im ersten Zeitabschnitt (t1) negativ ist.

5. Verfahren nach einem der vorhergehenden Ansprüche, bei dem zwischen dem ersten Zeitabschnitt (t1) und dem zweiten Zeitabschnitt (t2) in einem dritten Zeitabschnitt (t3) die Solldrehzahl (n*) mit konstanter Beschleunigung (a*) erhöht wird.

6. Antriebseinrichtung für ein Förderband (2), mit einem Motor (8) zum Antreiben einer Antriebstrommel (4) und einer Steuereinrichtung (10) zum Steuern des Sollwertes der Bandgeschwindigkeit (v*) beim Hochlauf des Förderbandes (2) derart, dass deren Beschleunigung (a*) in einem ersten Zeitabschnitt (t1) stetig zunimmt und in einem zweiten Zeitabschnitt (t2) stetig und mit einer positiven Krümmung abnimmt, wobei die zweite Zeitableitung der Beschleunigung (a*) im ersten und im zweiten Zeitabschnitt (t1, t2) jeweils konstant und entgegengesetzt gleich groß ist.

7. Antriebseinrichtung nach Anspruch 6, bei dem die erste Zeitableitung der Beschleunigung (a*) am Ende des zweiten Zeitabschnittes (t2) gleich Null ist.

8. Antriebseinrichtung nach Anspruch 6 oder 7, bei der die zweite Zeitableitung der Beschleunigung (a*) im zweiten Zeitabschnitt (t2) positiv ist.

9. Antriebseinrichtung nach Anspruch 7 in Verbindung mit Anspruch 8, bei der die zweite Zeitableitung der Beschleunigung (a*) im ersten Zeitabschnitt (t1) negativ ist.

## Claims

1. Method for controlling the run-up of a conveyor belt (2), in which the setpoint value of the belt speed (v*) is increased with an increasing acceleration (a*) in a first time interval (t1) and is increased with a decreasing acceleration (a*) in a second time interval (t2), the curve of the acceleration (a*) plotted against the time (t) having a positive curvature in the second interval (t2), the second time derivative of the acceleration (a*) in the first and in the second time interval (t1, t2) being in each case constant and equal and opposite.

2. Method according to Claim 1, in which the first time derivative of the acceleration (a*) is equal to zero at the end of the second time interval (t2).

3. Method according to Claim 1 or 2, in which the second time derivative of the acceleration (a*) is positive in the second time interval (t2).

4. Method according to Claim 1, 2 or 3, in which the second time derivative of the acceleration (a*) is negative in the first time interval (t1).

5. Method according to one of the preceding claims, in which, between the first time interval (t1) and the second time interval (t2), the rotational speed setpoint (n*) is increased with a constant acceleration (a*) in a third time interval (t3).

6. Drive device for a conveyor belt (2), having a motor (8) for driving a driving drum (4) and a control device (10) for controlling the setpoint value of the belt speed (v*) during the run-up of the conveyor belt (2), in such a way that the acceleration (a*) of the latter increases continuously in a first time interval (t1) and decreases continuously and with a positive curvature in a second time interval (t2), the second time derivative of the acceleration (a*) in the first and in the second time interval (t1, t2) being in each case constant and equal and opposite.

7. Drive device according to Claim 6, in which the first time derivative of the acceleration (a*) is equal to zero at the end of the second time interval (t2).

8. Drive device according to Claim 6 or 7, in which the second time derivative of the acceleration (a*) is positive in the second time interval (t2).

9. Drive device according to Claim 7 in conjunction with Claim 8, in which the second time derivative of the acceleration (a*) is negative in the first time interval (t1).

## Revendications

1. Procédé pour commander la montée en régime d'une bande transporteuse (2), selon lequel la valeur de consigne de la vitesse de bande (v*) est augmentée selon une accélération croissante (a*) dans un premier intervalle de temps (t1) et selon une accélération décroissante (a*) dans un deuxième intervalle de temps (t2), selon lequel la représentation graphique de l'accélération (a*) représentée en fonction du temps (t) présente une courbure positive dans le deuxième intervalle de temps (t2), la deuxième dérivée en fonction du temps de l'accélération (a*) dans le premier et dans le deuxième intervalle de temps (t1, t2) étant respectivement constantes et de grandeur égale et opposée.

2. Procédé selon la revendication 1, dans lequel la première dérivée de l'accélération (a*) en fonction du temps est égale à zéro à la fin du deuxième intervalle de temps (t2).

3. Procédé selon la revendication 1 ou 2, dans lequel la deuxième dérivée de l'accélération (a*) en fonction du temps est positive dans le deuxième intervalle de temps (t2).

4. Procédé selon la revendication 1, 2 ou 3, dans lequel la deuxième dérivée de l'accélération (a*) en fonction du temps est négative dans le premier intervalle de temps (t1).

5. Procédé selon l'une des revendications précédentes, dans lequel entre le premier intervalle de temps (t1) et le deuxième intervalle de temps (t2) la vitesse de rotation de consigne (n*) est augmentée selon une accélération (a*) constante dans un troisième intervalle de temps (t3).

6. Installation d'entraînement pour une bande transporteuse (2) comportant un moteur (8) destiné à entraîner un tambour d'entraînement (4) et une installation de commande (10) destinée à commander la valeur de consigne de la vitesse de bande (v*) lorsque la bande transporteuse (2) monte en régime de telle sorte que son accélération (a*) augmente constamment dans un premier intervalle de temps (t1) et diminue constamment dans un deuxième intervalle de temps (t2) et selon une courbure positive, la deuxième dérivée en fonction du temps de l'accélération (a*) dans le premier et dans le deuxième intervalle de temps (t1, t2) étant à chaque fois constante et de grandeur égale et opposée.

7. Installation d'entraînement selon la revendication 6, pour laquelle la première dérivée de l'accélération (a*) en fonction du temps à la fin du deuxième intervalle de temps (t2) est égale à zéro.

8. Installation d'entraînement selon la revendication 6 ou 7, pour laquelle la deuxième dérivée de l'accélération (a*) en fonction du temps dans le deuxième intervalle de temps (t2) est positive.

9. Installation d'entraînement selon la revendication 7 en liaison avec la revendication 8, pour laquelle la deuxième dérivée de l'accélération (a*) en fonction du temps dans le premier intervalle de temps (t2) est négative.
